# EUROPÄISCHE PATENTSCHRIFT

(11) **EP 1 780 087 B1**
(45) Veröffentlichungstag und Bekanntmachung des Hinweises auf die Patenterteilung: **27.07.2011**
(21) Anmeldenummer: 06022460.7
(22) Anmeldetag: 27.10.2006
(51) Int. Cl.: B60T 8/32, B60T 15/24, B60T 15/20, B60T 13/68, B60T 13/26

(54) **Verfahren zur Herstellung von Varianten elektro-pneumatischer Anhängersteuermodule**
Method for producing variants of electro-pneumatic trailer brake valves
Procédé de fabrication de variantes de valves de commande de remorque électro-pneumatique

(30) Priorität: 28.10.2005 DE 102005051686
(43) Veröffentlichungstag der Anmeldung: 02.05.2007
(73) Patentinhaber: KNORR-BREMSE Systeme für Nutzfahrzeuge GmbH, 80809 München (DE)
(72) Erfinder: Werner, Kai, 74321 Bietigheim-Bissingen (DE); Röther, Friedbert, 74389 Cleebronn (DE)
(74) Vertreter: Schönmann, Kurt

(56) Entgegenhaltungen:
- EP-A2- 1 022 204
- DE-A1- 10 236 920
- DE-A1- 19 609 222
- US-A- 4 616 881

## Beschreibung

### Stand der Technik

Die Erfindung betrifft ein Verfahren zur Herstellung von Varianten elektro-pneumatischer Anhängersteuermodule zur Ansteuerung der Druckluftbremsen eines Anhängers einer Zugfahrzeug-Anhängerkombination, beinhaltend jeweils wenigstens die folgenden, in einer Baueinheit zusammengefassten Bauteile bzw. Baugruppen :
a) ein Anhängersteuerventil, welches in Abhängigkeit wenigstens eines an wenigstens einem pneumatischen Steuereingang anstehenden pneumatischen Vorsteuerdrucks einen Steuerdruck für das Anhängerfahrzeug aussteuert,
b) wenigstens ein einem vorrangigen elektrischen Bremskreis zugeordnetes, elektrisch steuerbares Einlassventil, welches einen Druckluftvorrat mit einem ersten pneumatischen Steuereingang des Anhängersteuerventils verbindet oder diese Verbindung sperrt,
c) wenigstens ein dem vorrangigen elektrischen Bremskreis zugeordnetes, elektrisch steuerbares Auslassventil, welches den ersten pneumatischen Steuereingang des Anhängersteuerventils mit einer Entlüftung verbindet oder diese Verbindung sperrt,
d) ein elektrisch steuerbares Rückhalteventil, welches einen pneumatischen Vorsteuerdruck auf den ersten pneumatischen Steuereingang des Anhängersteuerventils schaltet oder diese Verbindung sperrt,
e) ein einem Feststellbremskreis zugeordneter erster pneumatischer Steueranschluss, welcher mit einem zweiten pneumatischen Steuereingang des Anhängersteuerventils in Verbindung steht,
f) ein elektronisches Steuergerät zur Ansteuerung des Rückhalteventils, des Einlassventils und des Auslassventils, wobei
g) ein einem nachrangigen pneumatischen Bremskreis zugeordneter zweiter pneumatischer Steueranschluss vorgesehen ist, welcher mit einem dritten pneumatischen Steuereingang des Anhängersteuerventils ständig in Verbindung steht, wobei der vom Rückhalteventil auf den ersten Steuereingang des Relaisventils schaltbare pneumatische Vorsteuerdruck entweder
h) ein einem weiteren nachrangigen pneumatischen Bremskreis zugeordneter Vorsteuerdruck ist, welcher in einen dritten pneumatischen Steueranschluss einsteuerbar und über eine Druckluftverbindung dem Rückhalteventil zusteuerbar ist, oder
i) von dem zweiten pneumatischen Steueranschluss abgezweigt ist und dem Rückhalteventil über eine andere Druckluftverbindung zusteuerbar ist.
gemäß dem Oberbegriff von Anspruch 1.

Ein elektro-pneumatisches Anhängersteuermodul gemäß der Merkmale a) bis f) ist beispielsweise aus der WO 97/32767 bekannt. Bei intaktem elektrischen Bremskreis ist das Rückhalteventil gesperrt, d.h. dass das Anhängersteuerventil alleine von einem Vorsteuerdruck angesteuert wird, der durch entsprechendes Schalten des Einlassventils und des Auslassventils abhängig von einem elektrischen Bremsanforderungssignal erzeugt wird. Falls der vorrangige elektrische Bremskreis ausfällt, wird das Rückhalteventil hingegen automatisch in seine Durchgangsstellung geschaltet, wodurch die Ansteuerung des Anhängersteuerventils durch einen Vorsteuerdruck erfolgt, welcher einem rein pneumatischen Bremskreis des Zugfahrzeugs zugeordnet ist. In der Praxis ist jedoch nicht auszuschließen, dass der vorrangige elektrische Bremskreis ausfällt, so dass die Zugfahrzeug-Anhängerkombination ausschließlich über den nachrangigen pneumatischen Bremskreis gebremst wird.

Ein elektro-pneumatisches Anhängersteuermodul gemäß der Merkmale a) bis g) und i) ist aus der DE 102 369 20 A1 bekannt. Diese erste Variante schlägt vor, den von dem Rückhalteventil weiter geschalteten Vorsteuerdruck für das Anhängersteuerventil von dem einen nachrangigen Bremskreis abzuzweigen. Damit ist eine redundante Ansteuerung des Anhängersteuerventils durch zwei pneumatische Vorsteuerdrücke gegeben, allerdings nur innerhalb des Anhängersteuermoduls.

Ein elektro-pneumatisches Anhängersteuermodul gemäß der Merkmale a) bis h) ist aus der EP 1 022 204 A2 bekannt. Gemäß dieser zweiten Variante wird folglich der Vorsteuerdruck eines weiteren nachrangigen pneumatischen Bremskreises zur Steuerung des Anhängersteuerventils herangezogen, falls der elektrische Bremskreis und der eine nachrangige pneumatische Bremskreis ausfallen. Dadurch wird eine echte zweikreisige pneumatische Ansteuerung des Anhängersteuerventils im Sinne einer pneumatischen Redundanz realisiert, welche die Ausfallsicherheit der Bremsanlage vorteilhaft erhöht.

Der vorliegenden Erfindung liegt demgegenüber die Aufgabe zugrunde, ein Verfahren zur Verfügung zu stellen, mit welchem beide Varianten von Anhängersteuermoduln kostengünstig zu fertigen sind.

Diese Aufgabe wird erfindungsgemäß durch die Merkmale von Anspruch 1 gelöst.

### Offenbarung der Erfindung

Die Erfindung basiert auf dem Gedanken, dass die eine Druckluftverbindung gemäß der einen Variante und die andere Druckluftverbindung gemäß der anderen Variante durch Druckluftkanäle gebildet werden, welche in einem ansonsten identischen Anhängersteuermodulgehäuse wahlweise hergestellt werden. Demzufolge unterscheiden sich die beiden Varianten lediglich durch die im ansonsten identischen Gehäuse unterschiedlich verlaufenden Druckluftkanäle, welche auf einfache Weise, z.B. durch ein spanabhebendes Verfahren gefertigt werden können, sowie durch einen einzigen Steueranschluss.

Wird die Druckluftverbindung gemäß der ersten Variante ((Merkmale a) bis g) und i)) gefertigt, so eignet sich das Anhängersteuermodul zum Einsatz in Bremssystemen mit einem elektrischen Bremskreis und einem unterlegten pneumatischen Bremskreis, bei Fertigung der Druckluftverbindung gemäß der zweiten Variante (Merkmale a) bis h)) hingegen für Bremssysteme mit einem elektrischen Bremskreis und zwei unterlegten pneumatischen Bremskreisen.

Durch die in den Unteransprüchen aufgeführten Maßnahmen sind vorteilhafte Weiterbildungen und Verbesserungen der in Patentanspruch 1 angegebenen Erfindung möglich.

Genaueres geht aus der folgenden Beschreibung eines Ausführungsbeispiels hervor.

### Zeichnung

Nachstehend ist ein Ausführungsbeispiel der Erfindung in der Zeichnung dar gestellt und in der nachfolgenden Beschreibung näher erläutert. In der Zeichnung zeigt
- Fig.1: ein Schaltschema eines Anhängersteuermoduls gemäß einer ersten Variante;
- Fig.2: ein Schaltschema eines Anhängersteuermoduls gemäß einer weite- ren Variante.

### Beschreibung des Ausführungsbeispiels

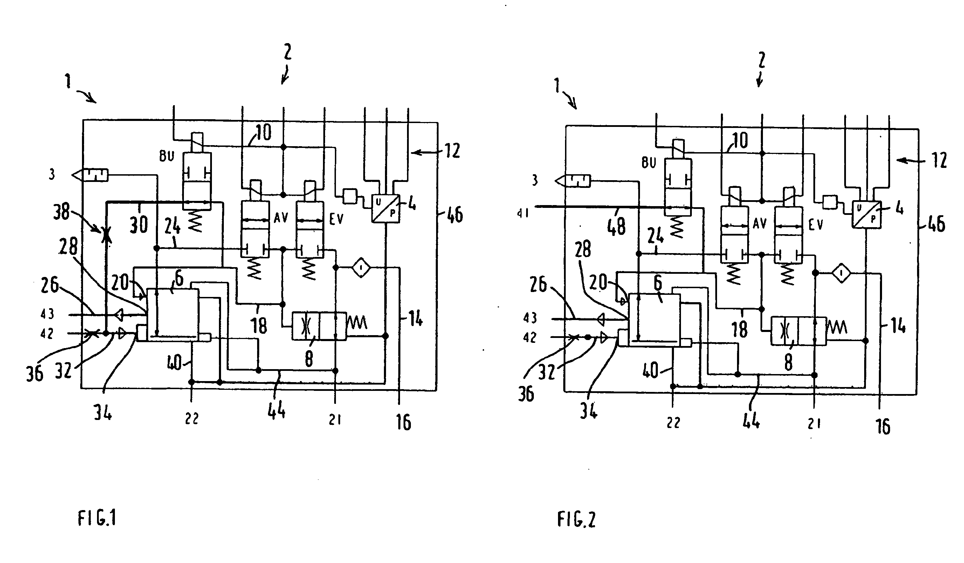

Das in Fig.1 insgesamt mit 1 bezeichnete elektro-pneumatische Anhängersteuermodul dient zur Ansteuerung der Druckluftbremsen eines Anhängers einer Zugfahrzeug-Anhängerkombination. Es befindet sich auf dem Zugfahrzeug. Das Anhängersteuermodul 1 ist Bestandteil eines zweikreisigen elektronischen Bremssystems EBS des Zugfahrzeugs, wobei von der Betriebsbremsanlage ein vorrangiger elektrischer Kreis und ein nachrangiger pneumatischer Bremskreis als unterlegte Sicherheitsebene vorhanden ist. Weiterhin ist ein Feststellbremskreis vorgesehen. Die Betriebsbremsanlage hat einen aus Maßstabsgründen nicht gezeigten, fußbetätigbaren Bremswertgeber mit einem elektrischen Teil und einem pneumatischen Teil. Der pneumatische Teil steht mit einem Druckluftvorrat in Verbindung.

Der Bremswertgeber ist mit seinem elektrischen Teil an den elektrischen Bremskreis und mit seinem pneumatischen Teil an den pneumatischen Bremskreis angeschlossen. Der elektrische Bremskreis weist ein nicht gezeigtes elektronisches Steuergerät auf, welches über eine elektrische Steuerleitung an elektrische Steueranschlüsse 2 des Anhängersteuermoduls 1 angeschlossen ist. Der pneumatische Bremskreis hat eine pneumatische Steuerleitung, die zu einem pneumatischen Steueranschluss 42 des Anhängersteuermoduls 1 führt.

Der Feststellbremskreis besitzt ein nicht gezeigtes handbetätigbares Feststellbremsventil, welches der Hinterachse des Zugfahrzeugs und dem Anhängerfahrzeug zugeordnete Feststellbremsen betätigt und weist eine pneumatische Steuerleitung auf, die zu einem Steueranschluss 43 des Anhängersteuermoduls 1 führt.

Das Anhängersteuermodul 1 beinhaltet im wesentlichen ein Rückhalteventil BU, ein Einlassventil EV, ein Auslassventil AV, einen Drucksensor 4, ein Anhängersteuerventil 6 sowie ein druckgesteuertes Drosselventil 8. Nicht zuletzt kann auch das elektronische Steuergerät in das Anhängersteuermodul 1 integriert sein. Das Rückhalteventil BU, das Einlassventil EV und das Auslassventil AV sind beispielsweise als elektromagnetisch betätigbare 2/2-Wegemagnetventile mit Federrückstellurig ausgebildet und von dem elektronischen Steuergerät über die elektrischen Steueranschlüsse 2 und Signalleitungen 10 ansteuerbar. Ebenso steht der Drucksensor 4 über Signalleitungen 12 mit dem elektronischen Steuergerät in Verbindung.

Das Einlassventil EV steht zuströmseitig über eine Leitung 14 mit einem Vorratsluftanschluss 16 des Anhängersteuermoduls 1 in Verbindung. Auslassseitig ist es zum einen über eine pneumatische Steuerleitung 18 an einen ersten pneumatischen Steuereingang 20 des Anhängersteuerventils und über eine Druckleitung an einen Eingang des Auslassventils AV angeschlossen. Das Einlassventil EV nimmt federbetätigt seine Sperrstellung und elektromagnetbetätigt seine Durchlassstellung ein.

Das Auslassventil AV ist eingangsseitig ebenfalls an die pneumatische Steuerleitung 18 und ausgangseitig über eine Auslassleitung 24 an eine Entlüftung oder Druckentlastungsstelle 3 des Anhängersteuermoduls 1 angeschlossen. Das Auslassventil AV nimmt federbetätigt seine Sperrstellung ein und ist elektromagnetbetätigt in seine Durchlassstellung geschaltet.

Von einem Steueranschluss 43 des Anhängersteuermoduls 1 für den Feststellbremskreis führt ein Druckluftkanal 26 zu einem zweiten Steuereingang 28 des Anhängersteuerventils 6.

Das Rückhalteventil BU steht einerseits mit der pneumatischen Steuerleitung 18 und andererseits dem pneumatischen Steueranschluss 42 über einen mit dickerer Linie gezeichneten Druckluftkanal 30 in Verbindung, welcher von einem weiteren Druckluftkanal 32 abzweigt, der vom pneumatischen Steueranschluss 42 zu einem dritten Steuereingang 34 des Anhängersteuerventils 6 führt. Der Abzweigung vorgeordnet ist in dem weiteren Druckluftkanal 32 eine Drossel 36. Eine weitere Drossel 38 ist in dem einen Druckluftkanal 30 vorhanden. Das Rückhalteventil BU nimmt stromlos seine Durchgangstellung und bestromt seine Sperrstellung ein.

Durch Betätigung des Bremswertgebers sind Bremsdruckanforderungssignale zu den elektrischen und pneumatischen Steueranschlüssen 2 und 42 des Anhängersteuermoduls 1 übertragbar. Das Anhängersteuerventil 6 ist über den ersten Steuereingang 20 und den dritten Steuereingang 34 durch Druckaufbau im Bremssinn über den zweiten Steuereingang 28 durch Druckabbau schaltbar. Über die Auslassleitung 24 sind das Anhängersteuerventil 6 sowie das Auslassventil AV weiterhin mit der Entlüftung 3 verbunden. Ausgangsseitig des Anhängersteuerventils 6 führt eine pneumatische Steuerleitung 40 zu einem Ausgangssteueranschluss 22 des Anhängersteuermoduls 1. Den Druck in dieser Steuerleitung 40 misst der Drucksensor 4. Schließlich ist das Anhängersteuermodul 1 über eine Vorratsdruckleitung 44 mit einem Vorratsluftanschluss 21 des Anhängersteuermoduls 1 verbunden. Der Vorratsluftanschluss 21 und der Ausgangssteueranschluss 22 sind mit einer Druckluftbremsanlage des Anhängerfahrzeugs verbindbar, insbesondere mit dessen Anhängerbremsventil.

In das Anhängersteuermodul 1 ist weiterhin das druckgesteuerte Drosselventil 8 integriert, welches zwischen den Vorratsluftanschluss 21 und das Einlassventils EV geschaltet ist. Es dient für den Fall, dass das Anhängerfahrzeug vom Zugfahrzeug abreißt dazu, den Druck am Vorratsluftanschluss 21 beschleunigt zu senken, damit das Anhängerbremsventil aufgrund des Druckverlusts in der Vorratsluftleitung eine automatische Bremsung des Anhängerfahrzeugs einleiten kann.

Die oben beschriebenen Bauteile und Baugruppen des Anhängersteuermoduls 1 sind beispielsweise in einem gemeinsamen Gehäuse 46 untergebracht, wobei die pneumatischen Leitungen 14, 18, 24, 30, 40, 44 hauptsächlich in den Gehäusewandungen ausgebildete Druckluftkanäle sind. Daneben oder stattdessen sind auch starre oder flexible Druckluftleitungen möglich.

Der Aufbau und die Wirkungsweise des vorzugsweise als Relaisventil ausgebildeten Anhängersteuerventils 6 sind bekannt, beispielsweise aus der Veröffentlichung "Druckluftanlagen für Nutzfahrzeuge 2, Geräte" der Robert Bosch GmbH, 1994, ISBN 1 987 722 016, deshalb soll an dieser Stelle nicht weiter darauf eingegangen werden. Vor diesem Hintergrund ist die Funktionsweise des Anhängersteuermoduls 1 wie folgt :
Bei Betätigen des Bremswertgebers erhält die Steuerelektronik ein elektrisches Bremsanforderungssignal, durch welches das Rückhalteventil BU in seine Sperrstellung geschaltet wird, so dass das über den pneumatischen Bremskreis in den Steueranschluss 42 eingesteuerte pneumatische Bremsdruckanforderungssignal am ersten Steuereingang 20 des Anhängersteuerventils 6 nicht wirksam werden kann.

Über den weiteren Druckkanal 32 steht zwar das pneumatische Bremsdruckanforderungssignal am dritten Steueranschluss 34 des Anhängersteuerventils 6 an, jedoch durch die Drossel 36 gedrosselt. Das durch den elektrischen Bremskreis erzeugte Steuerdrucksignal am ersten Steuereingang 20 des Anhängersteuerventils 6 hat jedoch Vorrang vor dem Signal des pneumatischen Steuerkreises am dritten Steuereingang 34 und wird wie folgt durch die Steuerelektronik moduliert : Für Druckaufbau am ersten Steuereingang 20 des Anhängersteuerventils 6 wird das Einlassventil EV in seine Durchgangsstellung geschaltet, während das Auslassventil AV in seiner Sperrstellung verharrt. Für Druckhalten wird das Einlassventil EV in seine Sperrstellung umgeschaltet. Für Druckabbau verharrt das Einlassventil EV in Sperrstellung, während das Auslassventil AV in die Durchlassstellung geschaltet wird. Entsprechend dem Signalverlauf am ersten Steuereingang 20 steuert das Anhängersteuerventil 6 einen Steuerdruck an den Ausgangssteueranschluss 22 des Anhängersteuermoduls 1 aus.

Ist der führende elektrische Bremskreis gestört, nehmen das Rückhalteventil BU, das Einlassventil EV und das Auslassventil AV die in Fig.1 gezeigte Stellung ein. Ein vom pneumatischen Teil des Bremswertgebers zum Steueranschluss 42 herangeführtes pneumatisches Bremsanforderungssignal wird über das durchlässige Rückhalteventil BU über die pneumatische Steuerleitung 18 in den ersten Steuereingang 20 des Anhängersteuerventils 6 eingesteuert, dem bei intakter Bremsanlage sonst das von der Steuerelektronik modulierte Bremsdruckanforderungssignal zugeführt wird. Gleichzeitig steht auch das pneumatische Bremsdruckanforderungssignal des pneumatischen Bremskreises als redundantes pneumatisches Signal am dritten Steuereingang 34 des Anhängersteuerventils 6 an. Die beiden in den ersten Steuereingang 20 und den dritten Steuereingang 34 des Anhängersteuerventils 6 eingesteuerten Bremsdruckanforderungssignale basieren folglich auf demselben Drucksignal am Steueranschluss 42.

Eine Abbremsung des Anhängerfahrzeugs ist ferner durch Druckabbau am zweiten Steuereingang 28 des Anhängersteuerventils 6 erzeugbar, indem mittels des Feststellbremsventils ein Druckabbau im Feststellbremskreis vorgenommen wird.

Bei dem weiteren, in Fig.2 gezeigten Ausführungsbeispiel der Erfindung sind die gegenüber dem vorangehenden Beispiel gleich bleibenden und gleich wirkenden Teile durch die gleichen Bezugszahlen gekennzeichnet. Im Unterschied zu diesem weist das elektronische Bremssystem des Zugfahrzeugs drei Bremskreise auf, nämlich einen vorrangigen elektrischen Bremskreis und zwei nachrangige pneumatische Bremskreise. Infolgedessen weist das Anhängersteuermodul gemäß Fig.2 neben dem Steueranschluss 42 für den ersten pneumatischen Bremskreis einen weiteren Steueranschluss 41 auf, in welchen das Bremsdruckanforderungssignal des zweiten pneumatischen Bremskreises eingesteuert wird. Dieser weitere Steueranschluss 41 steht über einen mit dicker Linie gezeichneten Druckluftkanal 48 mit dem Rückhalteventil BU in Verbindung. Dafür entfällt der abgezweigte Druckluftkanal 30 gemäß Fig.1, welcher das Rückhalteventil BU mit dem Steueranschluss 42 verbindet. Folglich ist das Anhängersteuerventil 6 gemäß Fig.2 durch zwei unabhängige pneumatische Bremsdruckanforderungssignale über die Steueranschlüsse 41 und 42 ansteuerbar, welche in dem Bremswertgeber in zwei voneinander unabhängigen Kanälen erzeugt werden.

Die Funktionsweise dieser Ausführungsform bei intaktem elektrischem Bremskreis ist identisch wie bei der vorangehend beschriebenen Variante. Bei Ausfall des elektrischen Bremskreises schaltet das dann bestromte Rückhalteventil BU in seine gezeigte Durchgangsstellung, so dass das über den Steueranschluss 41 ankommende pneumatische Bremsanforderungssignal des ersten pneumatischen Bremskreises auf den ersten Steuereingang 20 des Anhängersteuerventils 6 durchgeschaltet wird. Zugleich steht auch das pneumatische Bremsdruckanforderungssignal des zweiten pneumatischen Bremskreises am Steueranschluss 42 an und wird gedrosselt in den dritten Steuereingang 34 des Anhängersteuerventils 6 eingesteuert. Das Anhängersteuerventil 6 ist ausgebildet, um abhängig von jedem einzelnen der pneumatischen Bremsdruckanforderungssignale oder Vorsteuerdrücke einen Steuerdruck zu dem Ausgangssteueranschluss 22 des Anhängersteuermoduls 1 auszusteuern. Folglich ist diese Funktion auch bei Ausfall des elektrischen Bremskreises und eines der beiden pneumatischen Bremskreise gewährleistet.

Die beiden Ausführungsbeispiele unterscheiden sich folglich lediglich durch den Verlauf der beiden mit dickerer Linie gezeichneten Druckluftkanäle 30 und 48, welche in dem ansonsten identischen Gehäuse 46 des Anhängersteuermoduls 1 wahlweise herstellbar sind, sowie durch den zusätzlichen Steueranschluss 41 bei dem weiteren Ausführungsbeispiel von Fig.2. Diese Druckluftkanäle 30 und 48 können beispielsweise durch spanende Bearbeitung, vorzugsweise durch Bohren des Gehäuses 46 gefertigt werden.

Wird der Druckluftkanal 30 gemäß der ersten Variante von Fig.1 gefertigt, so eignet sich das Anhängersteuermodul 1 zum Einsatz in Bremssystemen mit einem elektrischen Bremskreis und einem unterlegten pneumatischen Bremskreis, bei Fertigung des Druckluftkanals 48 gemäß der zweiten Variante von Fig.2 hingegen für Bremssysteme mit einem elektrischen Bremskreis und zwei unterlegten pneumatischen Bremskreisen, wobei in beiden Fällen beide nicht den Feststellbremskreis betreffenden ersten und dritten Steuereingänge 20 und 34 des Anhängersteuerventils 6 mit pneumatischen, zumindest innerhalb des Gehäuses voneinander unabhängig geführten Bremsdruckanforderungssignalen beaufschlagt werden.

### Bezugszeichenliste

- 1: Anhängersteuermodul
- 2: Steueranschlüsse
- 3: Entlüftung
- 4: Drucksensor
- 6: Anhängersteuerventil
- 8: Drosselventil
- 10: Signalleitungen
- 12: Signalleitungen
- 14: Leitung
- 16: Vorratsluftanschluss
- 18: Steuerleitung
- 20: Steuereingang
- 21: Vorratsluftanschluss
- 22: Ausgangssteueranschluss
- 24: Auslassleitung
- 26: Druckluftkanal
- 28: Steuereingang
- 30: Druckluftkanal
- 32: Druckluftkanal
- 34: Steuereingang
- 36: Drossel
- 38: Drossel
- 40: Steuerleitung
- 41: Steueranschluss
- 42: Steueranschluss
- 43: Steueranschluss
- 44: Vorratsdruckleitung
- 46: Gehäuse

## Patentansprüche

1. Verfahren zur Herstellung von Varianten elektro-pneumatischer Anhängersteuermodule (1) zur Ansteuerung der Druckluftbremsen eines Anhängers einer Zugfahrzeug-Anhängerkombination, beinhaltend jeweils wenigstens die folgenden, in einer Baueinheit (46) zusammengefassten Bauteile bzw. Baugruppen :
a) ein Anhängersteuerventil (6), welches in Abhängigkeit wenigstens eines an wenigstens einem pneumatischen Steuereingang (20, 28, 34) anstehenden pneumatischen Vorsteuerdrucks einen Steuerdruck für das Anhängerfahrzeug aussteuert,
b) wenigstens ein einem vorrangigen elektrischen Bremskreis zugeordnetes, elektrisch steuerbares Einlassventil (EV), welches einen Druckluftvorrat mit einem ersten pneumatischen Steuereingang (20) des Anhängersteuerventils (6) verbindet oder diese Verbindung sperrt,
c) wenigstens ein dem vorrangigen elektrischen Bremskreis zugeordnetes, elektrisch steuerbares Auslassventil (AV), welches den ersten pneumatischen Steuereingang (20) des Anhängersteuerventils (6) mit einer Entlüftung (3) verbindet oder diese Verbindung sperrt,
d) ein elektrisch steuerbares Rückhalteventil (BU), welches einen pneumatischen Vorsteuerdruck auf den ersten pneumatischen Steuereingang (20) des Anhängersteuerventils (6) schaltet oder diese Verbindung sperrt,
e) ein einem Feststellbremskreis zugeordneter erster pneumatischer Steueranschluss (43), welcher mit einem zweiten pneumatischen Steuereingang (28) des Anhängersteuerventils (6) in Verbindung steht,
f) ein elektronisches Steuergerät zur Ansteuerung des Rückhalteventils (BU), des Einlassventils (EV) und des Auslassventils (AV), wobei
g) ein einem nachrangigen pneumatischen Bremskreis zugeordneter zweiter pneumatischer Steueranschluss (42) vorgesehen ist, welcher mit einem dritten pneumatischen Steuereingang (34) des Anhängersteuerventils (6) in Verbindung steht, wobei der vom Rückhalteventil (BU) auf den ersten Steuereingang (20) des Anhängersteuerventils (6) schaltbare pneumatische Vorsteuerdruck entweder
h) ein einem weiteren nachrangigen pneumatischen Bremskreis zugeordneter Vorsteuerdruck ist, welcher in einen dritten pneumatischen Steueranschluss (41) einsteuerbar und über eine Druckluftverbindung (48) dem Rückhalteventil (BU) zusteuerbar ist, oder
i) von dem zweiten pneumatischen Steueranschluss (42) abgezweigt ist und dem Rückhalteventil (BU) über eine andere Druckluftverbindung (30) zusteuerbar ist,
**dadurch gekennzeichnet, dass**
k) eine Druckluftverbindung (48) und die andere Druckluftverbindung (30) durch Druckluftkanäle gebildet werden, welche in einem ansonsten identischen Anhängesteuermodulgehäuse (46) wahlweise hergestellt werden.

2. Verfahren nach Anspruch 1, **dadurch gekennzeichnet, dass** die Druckluftkanäle (30, 48) durch spanende Bearbeitung gefertigt werden.

3. Verfahren nach Anspruch 1 oder 2, **dadurch gekennzeichnet, dass** das Anhängersteuerventil (6) als Relaisventil ausgebildet ist.

## Claims

1. Method of producing variants of electro-pneumatic trailer brake vale modules (1) for controlling the compressed-air brakes of a trailer in a tractor/trailer combination, including each at least the following components or modules, respectively, combined in one structural unit (46):
(a) one trailer control valve (6) that controls a control pressure for said trailer vehicle as a function of at least one pneumatic pilot pressure applied on at least one pneumatic control input (20, 28, 34),
(b) at least one inlet valve (EV) adapted to be electrically controlled, which is associated with an electrical brake circuit having a higher priority, which inlet valve communicates a compressed-air reservoir with a first pneumatic control input (20) of said trailer control valve (6) or blocks this communication,
(c) at least one electrically controllable outlet valve (AV) associated with said electrical brake circuit having a higher priority, which outlet valve communicates said first pneumatic control input (20) of said trailer control valve (6) with a ventilation means (3) or blocks this communication,
(d) an electrically controllable pressure-reducing valve (BU) that connects a pneumatic pilot pressure to said first pneumatic control input (20) of said trailer control valve (6) or blocks this communication,
(e) a first pneumatic control port (43) associated with a parking brake circuit, which port communicates with a second pneumatic control input (28) of said trailer control valve (6),
(f) an electronic controller for controlling said pressure-reducing valve (BU), said inlet valve (EV) and said outlet valve (AV), with
(g) a second pneumatic control port (42) being provided and associated with a pneumatic brake circuit of lower priority, which control port communicates with a third pneumatic control input (34) of said trailer control valve (6), wherein the pneumatic pilot pressure adapted to be switched by said pressure-reducing valve (BU) to said first control input (20) of said trailer control valve (6)
(h) is either a pilot pressure associated with a further pneumatic brake circuit of lower priority, which is adapted to be controlled into a third pneumatic control port (41) and controlled via a compressed-air connection (48) to said pressure-reducing valve (BU), or
(i) is branched off said second pneumatic control port (42) and adapted to be controlled to said pressure-reducing valve (BU) via another compressed-air-connection (30),
**characterised in that**
(k) a compressed-air connection (48) and said other compressed-air connection (30) are formed by compressed-air ducts that are optionally established in a trailer controller module housing (46) that is identical in all other respects.

2. Method according to Claim 1, **characterized in that** said compressed-air ducts (30, 48) are created by machining with chip removal.

3. Method according to Claim 1 or 2, **characterized in that** said trailer control valve (6) is configured as relay valve.

## Revendications

1. Procédé de fabrication des variantes des modules électropneumatiques de freins de remorque (1) à commander les freins à air comprimé d'une remorque dans une combinaison véhicule tracteur/remorque, renfermant chacun au moins les composants ou respectivement modules suivants, combines dans une seule unité modulaire (46) :
(a) une soupape de commande de remorque (6), qui commande une pression de commande pour ledit véhicule remorque en fonction d'au moins une pression pilote pneumatique appliquée à au moins une entrée pneumatique de commande (20, 28, 34),
(b) au moins une soupape d'entrée (EV) apte à être commandé de façon électrique, qui est affectée à un circuit de freinage électrique à plus haute priorité, qui met un réservoir de l'air comprimé en communication avec une première entrée pneumatique de commande (20) de ladite soupape de commande de remorque (6) ou qui bloque cette communication,
(c) au moins une soupape de sortie à commande électrique (AV) affecté audit circuit de freinage électrique à une plus haute priorité, qui met ladite première entrée pneumatique de commande (20) de ladite soupape de commande de remorque (6) en communication avec un moyen de ventilation (3), ou qui bloque cette communication,
(d) une soupape de réduction de pression (BU) à commande électrique, qui commute une pression pilote pneumatique à ladite première entrée pneumatique de commande (20) de ladite soupape de commande de remorque (6), ou qui bloque cette communication,
(e) un premier connecteur pneumatique de commande (43) affecté à un circuit de freinage d'arrêt, qui se trouve en communication avec une deuxième entrée pneumatique de commande (28) de ladite soupape de commande de remorque (6),
(f) une unité électronique de commande à commander ladite soupape de réduction de pression (BU), ladite soupape d'entrée (EV) et ladite soupape de sortie (AV), à
(g) un deuxième connecteur pneumatique de commande (42) étant disposé et affecté à un circuit de freinage pneumatique à priorité inférieure, lequel connecteur se trouve en communication avec une troisième entrée pneumatique de commande (34) de ladite soupape de commande de remorque (6), dans lequel la pression pilote pneumatique, apte à être commutée par ladite soupape de réduction de pression (BU) à ladite première entrée de commande (20) de ladite soupape de commande de remorque (6)
(h) est une pression pilote affectée à un autre circuit de freinage pneumatique à priorité inférieure, qui est apte à être commandée en un troisième connecteur pneumatique de commande (41) et commandé via un connecteur de l'air comprimé (48) vers ladite soupape de réduction de pression (BU), ou
(i) est dérivée dudit deuxième connecteur pneumatique de commande (42) et est apte à être commandée vers ladite soupape de réduction de pression (BU) via un autre connecteur de l'air comprimé (30),
**caractérisé en ce**
(k) **qu'**un connecteur de l'air comprimé (48) et ledit autre connecteur de l'air comprimé (30) sont formés par des conduits de l'air comprimé, qui sont établis à volonté dans un carter de module de l'unité de commande d'une remorque (46) identique dans tous les autres respects.

2. Procédé selon la revendication 1, **caractérisé en ce que** lesdits conduits de l'air comprimé (30, 48) sont faits par outillage à enlèvement de copeaux.

3. Procédé selon la revendication 1 ou 2, **caractérisé en ce que** ladite soupape de commande de remorque (6) est configurée sous forme d'une soupape de relais.
